# EUROPEAN PATENT APPLICATION

(11) **EP 2 023 284 A1**
(43) Date of publication of application: **11.02.2009**
(21) Application number: 06746742.3
(22) Date of filing: 23.05.2006
(51) Int. Cl.: G06T 1/00

(54) **FACE AUTHENTICATION DEVICE, FACE AUTHENTICATION METHOD, AND FACE AUTHENTICATION PROGRAM**

(71) Applicant: Glory Ltd., Himeji-shi, Hyogo 670-8567 (JP)
(72) Inventor: YAMASHITA, Masao, Himeji-shi, Hyogo 670-8567 (JP); ADACHI, Kazutaka, Himeji-shi, Hyogo 670-8567 (JP); KAMEYAMA, Hirofumi, Himeji-shi, Hyogo 670-8567 (JP); KAMISE, Yojiro, Himeji-shi, Hyogo 670-8567 (JP); UMABA, Shunsuke, Himeji-shi, Hyogo 670-8567 (JP)
(74) Representative: Schwabe - Sandmair - Marx
(86) International application number: PCT/JP2006/310258
(87) International publication number: WO 2007/135735

(57) **Abstract**

When a human detection sensor detects a person to be authenticated, an illumination unit obtains ambient light illuminance measured by an illuminance sensor. Lighting illuminance is then determined by using illuminance conversion information, which indicates the lighting illuminance corresponding to the ambient light illuminance, so that when the ambient light illuminance is low, the lighting illuminance becomes low, and when the ambient light illuminance is high, the lighting illuminance becomes high. The illuminance of a light source is controlled so that intensity of illumination becomes the determined illuminance. A face authentication terminal then authenticates the person to be authenticated under illumination by the illumination unit.

## Description

### TECHNICAL FIELD

The present invention relates to a face authentication device, a face authentication method, and a face authentication program that perform user authentication by capturing a face image of a person to be authenticated as an input image, and collating the captured input image with a registered image, and, more particularly to a face authentication device, a face authentication method, and a face authentication program that can perform accurate authentication under various ambient light conditions without giving a sense of discomfort to the person to be authenticated.

### BACKGROUND ART

Conventionally, a face authentication device is known, which collates an input image obtained by capturing a face image of a person to be authenticated by a charge coupled device (CCD) camera or the like with a pre-registered image, to authenticate a user.

Such a face authentication device has many needs under various ambient light conditions, such as being installed outside a building in direct sunlight to be used for checking a person who enters the building, or being installed in dark indoor places to be used for checking a person who enters a certain room in the building.

However, if an input image is captured under various ambient light conditions, a shadow may be cast over the face in the direct sunlight, or the face itself becomes obscure in the dark indoor places, so that features of the face hardly appear in the input image. Therefore, there is a problem that collation accuracy between the input image and the registered image decreases.

Therefore, to realize accurate face collation under various ambient light conditions, such a method has been proposed that an illumination device synchronized with the face authentication device is provided and intensity of light emitted by the illumination device is controlled. For example, Patent Documents 1 and 2 disclose an illumination control method in which lighting illuminance is decreased in a place where the ambient light is bright, or the lighting illuminance is increased in a place where the ambient light is dark, to thereby stabilize the illuminance of an object to be captured near a predetermined reference value.

Patent Document 1: Japanese Patent Application Laid-open No. 2005-92700
Patent Document 2: Japanese Patent Application Laid-open No. 2005-165943

### DISCLOSURE OF INVENTION

### PROBLEM TO BE SOLVED BY THE INVENTION

The method disclosed in Patent Documents 1 and 2 aims at a practical use in the indoors. If an indoor device applying this method is installed outdoors, when a surrounding area is dark, it is in the same condition as dark indoor places, and therefore control to increase the illumination is performed. At this time, not so strong light is required. However, when the surrounding area is bright, the illuminance exceeds the maximum illuminance presumed indoors, and therefore the illumination has to be turned off. Therefore, the shadow on the face cannot be negated or alleviated, thereby making it difficult to perform accurate face authentication.

Further, if the method disclosed in Patent Documents 1 and 2 is applied to an outdoor device, the predetermined reference value needs to be set brighter than in the indoors, to take the face image favorably even in the direct sunlight. Therefore, when the surrounding area is dark, strong light is emitted, which gives the sense of discomfort to the person to be authenticated.

Therefore, it is a major issue as to how to realize the face authentication device that can perform accurate authentication under various ambient light conditions, without giving the sense of discomfort to the person to be authenticated. This issue also occurs at the time of obtaining the input image and at the time of obtaining the registered image.

The present invention has been achieved to solve the problems in the conventional technique, and an object of the present invention is to provide a face authentication device, a face authentication method, and a face authentication program that can perform accurate authentication under various ambient light conditions, without giving a sense of discomfort to the person to be authenticated.

### MEANS FOR SOLVING PROBLEM

To solve the problems and achieve the object, the present invention is a face authentication device that performs authentication by capturing a face image of a person to be authenticated as an input image and collating the input image with a registered image. The face authentication device includes an ambient-light illuminance detector that detects an illuminance of ambient light; an illumination unit that irradiates with light the face of the person to be authenticated; and an illumination controller that controls irradiation light by the illumination unit so that when the illuminance of the ambient light detected by the ambient-light illuminance detector is low, the irradiation light becomes weak, and when the illuminance of the ambient light is high, the irradiation light becomes strong.

In the present invention, the illumination controller controls the irradiation light by the illumination unit so that the irradiation light is changed at least in a range of from 1000 lux to 10000 lux.

In the present invention, the illumination controller controls the irradiation light by the illumination unit so that the irradiation light is changed stepwise or continuously in a range of from 2000 lux to 20000 lux of the illuminance of the ambient light detected by the ambient-light illuminance detector.

In the present invention, the ambient-light illuminance detector detects the illuminance of the ambient light, when a human detection sensor detects the person to be authenticated.

In the present invention, the illumination unit includes a single type of light source that changes intensity of the irradiation light according to a voltage change or current change.

In the present invention, the illumination unit includes different types of light sources having different intensity of the irradiation light, and the illumination controller controls the intensity of the irradiation light by changing over the light sources.

In the present invention, the illumination controller controls the intensity of the irradiation light by changing the voltage or current applied to the light source.

In the present invention, the illumination unit is fitted to a position where the face of the person to be authenticated is irradiated from above.

In the present invention, the ambient-light illuminance detector is an illuminance sensor and provided with its face downward below the illumination unit.

In the present invention, the ambient-light illuminance detector detects the illuminance of the ambient light based on a luminance of the input image.

The present invention further includes a registration unit that captures the face image of the person to be authenticated irradiated by the illumination unit and registers the captured image as the registered image.

The present invention is a face authentication method for performing authentication by capturing a face image of a person to be authenticated as an input image and collating the input image with a registered image. The face authentication method includes an ambient-light illuminance detecting step of detecting an illuminance of ambient light; and an illumination control step of controlling irradiation light by an illumination unit that irradiates with light the face of the person to be authenticated so that when the illuminance of the ambient light detected at the ambient-light illuminance detecting step is low, the irradiation light becomes weak, and when the illuminance of the ambient light is high, the irradiation light becomes strong.

The present invention is a face authentication program for performing authentication by capturing a face image of a person to be authenticated as an input image and collating the input image with a registered image. The program causes a computer to execute an ambient-light illuminance detecting step of detecting an illuminance of ambient light; and an illumination control step of controlling irradiation light by an illumination unit that irradiates with light the face of the person to be authenticated so that when the illuminance of the ambient light detected at the ambient-light illuminance detecting step is low, the irradiation light becomes weak, and when the illuminance of the ambient light is high, the irradiation light becomes strong.

### EFFECT OF THE INVENTION

According to the present invention, the illuminance of ambient light is detected, light is emitted to the face of the person to be authenticated, and control is performed so that irradiation light becomes weak when the detected illuminance of ambient light is low, and the irradiation light becomes strong when the illuminance of ambient light is high. Therefore, when the surrounding area of the face authentication device is dark, weak light is emitted, and when the surrounding area is bright, strong light is emitted to negate or alleviate the influence of the ambient light, so that a face image can be obtained without dazzling the person to be authenticated. Therefore, a favorable face image can be obtained under various ambient light conditions, without giving the sense of discomfort to the person to be authenticated.

According to the present invention, it is controlled so that the irradiation light is changed at least within a range of from 1000 lux to 10000 lux. Therefore, the person to be authenticated will not have the sense of discomfort, by irradiating the light sufficient for negating or alleviating the influence of the ambient light within a range of from the minimum illuminance of the irradiation light required for authentication during night or inside the building, to the maximum illuminance of the irradiation light required for authentication outside the building on a fine day.

According to the present invention, because the irradiation light is changed stepwise or continuously at least within a range of from 2000 lux to 20000 lux of the illuminance of the ambient light, a face image can be obtained with accuracy that can be used for authentication in a range of from the ambient light illuminance during night or inside the building, to the illuminance of the outside ambient light.

According to the present invention, when a human detection sensor detects the person to be authenticated, the illuminance of the ambient light is detected. Therefore, even if the face authentication device is installed in a place where the ambient light is likely to change, the ambient light illuminance can be obtained accurately at the time of authentication.

According to the present invention, because an illumination device including a single type of light source that changes the intensity of the irradiation light by a change of voltage or current is used, the irradiation light can be efficiently adjusted according to the ambient light illuminance.

According to the present invention, because an illumination device including different types of light sources having different intensity of the irradiation light is used, and the intensity of the irradiation light is controlled by changing over the light sources, the lighting illuminance corresponding to the ambient light illuminance can be easily obtained.

According to the present invention, because the intensity of the irradiation light is controlled by changing the voltage or current applied to the light source, fine illuminance adjustment can be performed for either case of the single type of light source and the different type of light sources.

According to the present invention, because the illumination device is fitted at a position where the face of the person to be authenticated is irradiated from above, the person to be authenticated is not dazzled by preventing the light emitted by the illumination device from directly entering to the eyes of the person to be authenticated.

According to the present invention, the ambient light illuminance is detected by an illuminance sensor, and the illuminance sensor is provided with its face downward below the illumination device. Therefore, by preventing that the illuminance sensor detects direct light, the ambient light illuminance based on reflected light can be accurately detected.

According to the present invention, because the illuminance of the ambient light is detected based on luminance of the input image, the illuminance of the ambient light can be accurately detected.

According to the present invention, the face image of the person to be authenticated irradiated by the illumination device is captured, and the captured image is registered as a registered image. Therefore, the influence of the ambient light can be favorably negated or alleviated not only at the time of authentication but also when the face image is registered.

### BRIEF DESCRIPTION OF DRAWINGS

[Fig. 1] Fig. 1 depicts a relationship between lighting illuminance and ambient light illuminance.
[Fig. 2] Fig. 2 is an example of input images captured under direct sunlight.
[Fig. 3] Fig. 3 is an arrangement example a face authentication device according to the present invention.
[Fig. 4] Fig. 4 is a block diagram of a configuration of a face authentication device according to a first embodiment.
[Fig. 5] Fig. 5 is one example of illuminance conversion information according to the first embodiment.
[Fig. 6] Fig. 6 is a flowchart of a process procedure performed by the face authentication device according to the first embodiment.
[Fig. 7] Fig. 7 is a block diagram of a configuration of a face authentication device according to a second embodiment.
[Fig. 8] Fig. 8 is one example of illuminance conversion information according to the second embodiment. EXPLANATIONS OF LETTERS OR NUMERALS

- 1: face authentication device
- 10: illumination unit
- 11: illuminance conversion information
- 12: illumination controller
- 13: halogen lamp
- 13a: incandescent lamp
- 14: illuminance sensor
- 20: face authentication terminal
- 21: face authentication algorithm
- 22: camera
- 23: human detection sensor

### BEST MODES FOR CARRYING OUT THE INVENTION

Exemplary embodiments of a face authentication device, a face authentication method, and a face authentication program in which an illumination method according to the present invention is applied will be explained below in detail with reference to the accompanying drawings. Hereinafter, an outline and characteristics of an illumination method according to the present invention are explained, for each case of using the single type of light source (a first embodiment) and using the different types of light sources (a second embodiment).

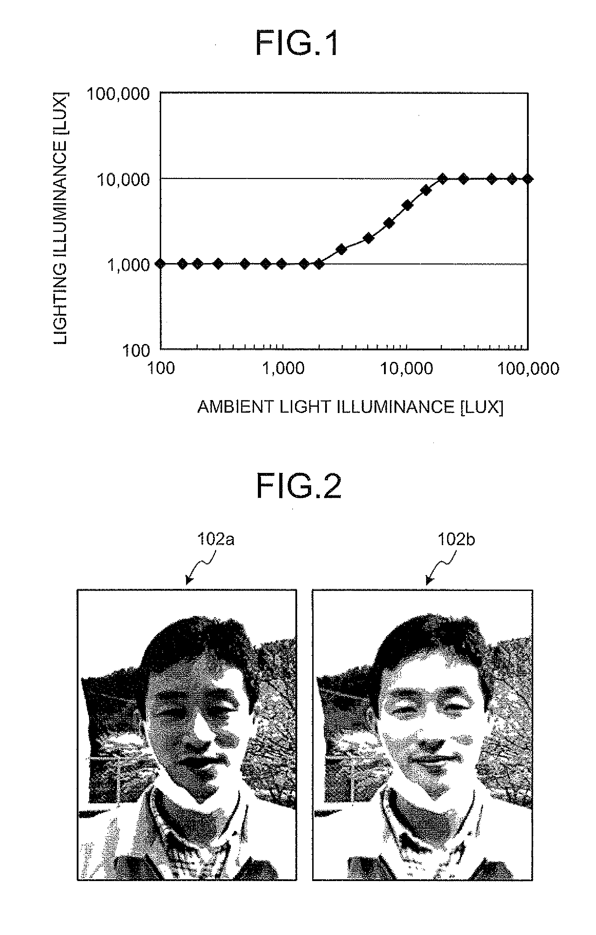

The outline and the characteristics of the illumination method according to the present invention are explained first with reference to Figs. 1 to 3. Fig. 1 depicts a relationship between lighting illuminance and ambient light illuminance. As shown in Fig. 1, according to the illumination method, when the ambient light illuminance is equal to or lower than 2000 lux, the lighting illuminance is set to about 1000 lux, and when the ambient light illuminance is equal to or higher than 20000 lux, the lighting illuminance is set to 10000 lux, and when the ambient light illuminance is in a range of from 2000 lux to 20000 lux, the lighting illuminance is changed gradually (continuously or stepwise) in a range of from 1000 lux to 10000 lux.

Conventionally, to obtain a favorable face image (a face image with shadow due to the ambient light being equal to or less than an acceptable value) under various ambient light conditions from in a dark room and nighttime (0 lux) to outdoors on a fine day (100000 lux or higher), the sunlight is usually intercepted by physical means (for example, by a curtain or screen). However, because the sun moves, the physical means cannot always intercept the light from any direction, and even if it is possible, a huge apparatus needs to be provided.

Further, there is a method in which the illuminance of the irradiation light is changed according to the ambient light illuminance. However, this conventional method aims at practical use inside a building, and when the ambient light illuminance is low (the surrounding area is dark), the illuminance of the irradiation light is increased (the irradiation light is intensified), and when the ambient light illuminance is high (the surrounding area is bright), the illuminance of the irradiation light is decreased (the irradiation light is weakened). That is, when this conventional method is used, control is performed such that the illumination is turned off in a very bright environment outside the building. Accordingly, accurate face authentication cannot be performed due to the influence of a shadow on the face.

Further, because the conventional method is for stabilizing the illuminance of an object to be captured around a predetermined reference value, if it is attempted to take a favorable face image even under direct sunlight, the predetermined reference value needs to be set brighter than in the inside of the building. Therefore, when the surrounding area is dark, strong light is emitted, which gives the sense of discomfort to the person to be authenticated.

According to the illumination method of the present invention, therefore, when the ambient light illuminance is low (the surrounding area is dark), the illuminance of the irradiation light is decreased (the irradiation light is weakened), and when the ambient light illuminance is high (the surrounding area is bright), the illuminance of the irradiation light is increased (the irradiation light is intensified). The reason why weak irradiation light is used when the surrounding area is dark and strong irradiation light is used when the surrounding area is bright is as described below.

That is, when the surrounding area is dark, a shadow by the ambient light is hardly generated on the face. Therefore, the necessity minimum light for capturing the face image needs to be emitted. On the contrary, when the surrounding area is bright, the shadow by the ambient light is easily generated on the face. Therefore, the necessity minimum light for negating or alleviating the shadow due to the ambient light needs to be emitted.

Fig. 1 depicts a case that the illumination control is performed in a range of from 2000 lux to 20000 lux of the ambient light illuminance. However, the illumination can be controlled outside this range. While Fig. 1 depicts a case that the lighting illuminance is controlled in a range of from 1000 lux to 10000 lux, the illumination control can be performed so that the illuminance outside this range is obtained.

Fig. 2 depicts input images captured under direct sunlight. 102a in Fig. 2 is a face image when the direct sunlight (about 100000 lux) is received from the right side on the page and 102b is a face image when the irradiation light of about 10000 lux is further emitted from above, in the same environment as 101a.

As shown in 102a of Fig. 2, a strong shadow is formed on the face subjected to direct sunlight, and therefore the face image in 102a cannot be used for face authentication. On the other hand, as shown in 102b, the strong shadow due to the direct sunlight is deleted from the face irradiated by the irradiation light from above, and the face image in 102b can be used for face authentication. The reason why the irradiation light is emitted from above as in 102b is that the person to be authenticated is not dazzled by preventing the light emitted by the illumination device from directly entering into the eyes of the person to be authenticated.

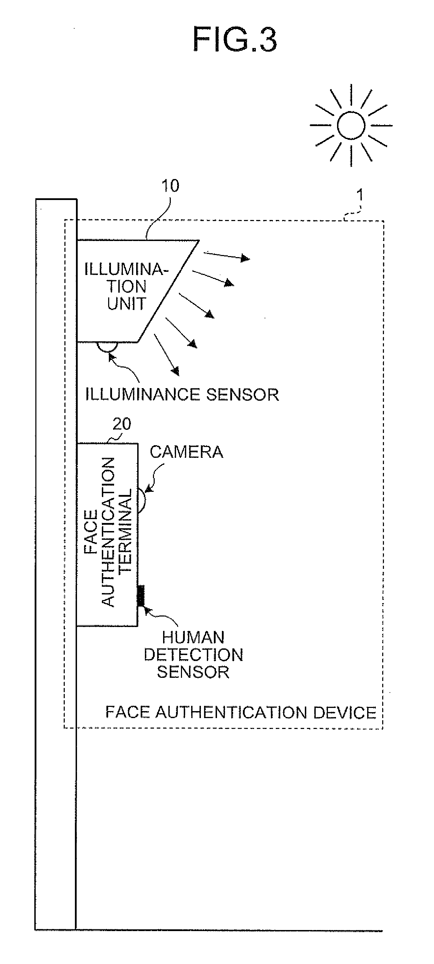

An arrangement example of the face authentication device applying the illumination method according to the present invention is explained with reference to Fig. 3. Fig. 3 is the arrangement example of the face authentication device according to the present invention. In Fig. 3, an arrangement example in which a face authentication device 1 is installed outside the building is shown.

As shown in Fig. 3, the face authentication device 1 includes an illumination unit 10 and a face authentication terminal 20, and an illuminance sensor is fitted with its face downward below the illumination unit 10. The face authentication terminal 20 fitted below the illumination unit includes a camera and a human detection sensor. The illumination unit 10 and the face authentication terminal 20 are connected to each other by wired or wireless connection.

The face authentication device 1 having such a configuration measures the ambient illuminance (ambient light illuminance) at timing when the human detection sensor of the face authentication terminal 20 detects a person to be authenticated, and causes the illumination unit 10 to emit light with an amount of light corresponding to the measured ambient light illuminance. The face authentication terminal 20 then captures in the face image of the person to be authenticated irradiated with the irradiation light by the illumination unit 10 as an input image and collates the captured input image with a pre-registered image, to thereby authenticate the person to be authenticated.

The reason why the illumination unit 10 is fitted above the face authentication terminal 20 is to prevent that the irradiation light directly enters into the eyes of the person to be authenticated, by irradiating the irradiation light from above of the person to be authenticated. Further, the reason why the illuminance sensor is fitted with its face downward below the illumination unit 10 is to prevent that the illuminance sensor detects the direct light (for example, direct sunlight or direct light of indoor illumination).

In the illumination method according to the present invention, face authentication can be performed without dazzling the person to be authenticated, by controlling (adjusting) the intensity of the irradiation light required for obtaining a favorable face image under various ambient light conditions. The face authentication device applying the illumination method according to the present invention is explained below in more detail.

### First embodiment

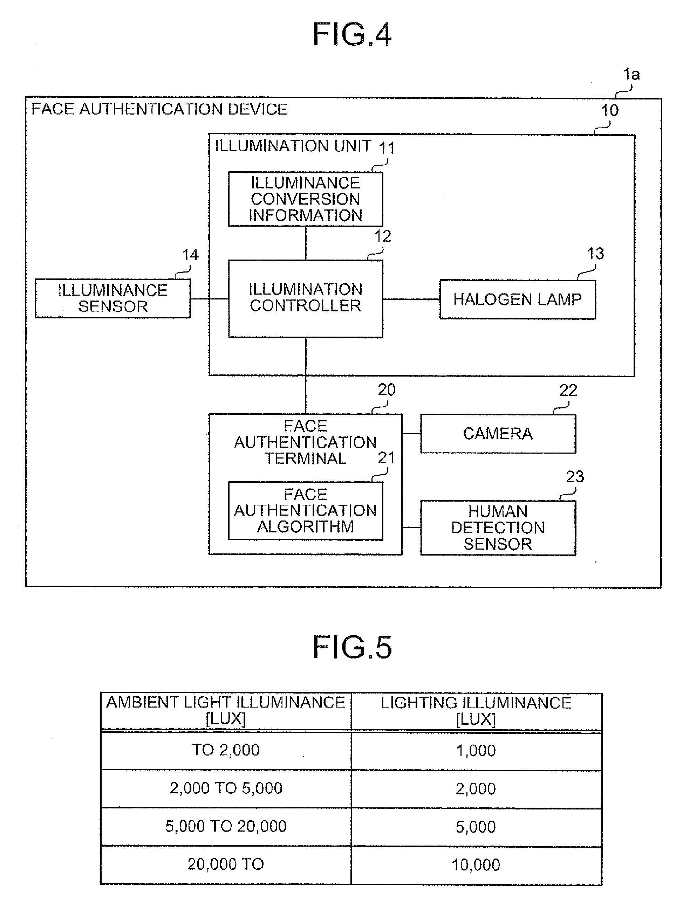

In a first embodiment, a face authentication device 1a in which a single type of light source is used for the illumination unit 10 shown in Fig. 3 is explained in detail. The configuration of the face authentication device 1a is first explained with reference to Fig. 4. Fig. 4 is a block diagram of the configuration of the face authentication device 1a according to the first embodiment.

As shown in Fig. 4, the face authentication device 1a includes the illumination unit 10 and the face authentication terminal 20. The illumination unit 10 stores illuminance conversion information 11, and includes an illumination controller 12 and a halogen lamp 13. An illuminance sensor 14 is connected to the illumination controller 12. The face authentication terminal 20 stores a face authentication algorithm 21, and a camera 22 and a human detection sensor 23 are connected to the face authentication terminal 20.

The illumination unit 10 corresponds to the illumination unit 10 shown in Fig. 3, and determines optimum lighting illuminance by using the illuminance conversion information 11, based on the ambient light illuminance measured by the illuminance sensor 14. The illumination controller 12 then adjusts the voltage applied to the halogen lamp 13 to thereby irradiate with illumination light the face of the person to be authenticated. The illumination unit 10 executes a lighting process of the halogen lamp 13 at timing of receiving information indicating that the human detection sensor 23 has detected a person to be authenticated via the face authentication terminal 20.

The illuminance conversion information 11 represents a relationship between the ambient light illuminance measured by the illuminance sensor 14 and the illuminance of the irradiation light to be emitted by the halogen lamp 13. The illuminance conversion information 11 is stored in a storage device such as a nonvolatile random access memory (RAM) in a format of an "illuminance conversion table" or an "illuminance conversion equation".

One example of the illuminance conversion information 11 is explained here with reference to Fig. 5. Fig. 5 is one example of the illuminance conversion information according to the first embodiment. An example of the "illuminance conversion table" is shown in Fig. 5. Fig. 5 is an example in which the ambient light illuminance is divided into four ranges, and the lighting illuminance is made constant in each range.

As shown in Fig. 5, for example, when the ambient light illuminance is equal to or less than 2000 lux, the illuminance of the illumination unit 10 is 1000 lux, and when the ambient light illuminance is from 2000 lux to 5000 lux, the lighting illuminance is 2000 lux. Fig. 5 depicts a case that the lighting illuminance is made constant in each range of the ambient light illuminance. However, the lighting illuminance may be increased continuously or stepwise with an increase of the ambient light illuminance.

Upon reception of a lighting instruction from the face authentication terminal 20, the illumination controller 12 obtains the ambient light illuminance measured by the illuminance sensor 14, determines the optimum lighting illuminance based on the obtained ambient light illuminance by using the illuminance conversion information 11, and controls the lighting illuminance of the halogen lamp 13 by adjusting the voltage applied to the halogen lamp 13. In the first embodiment, a case that the halogen lamp 13 is used as the light source is shown. However, when an LED (light emitting diode) is used as the light source, the illuminance of the LED is adjusted by controlling the current applied to the LED.

The halogen lamp 13 is one example of the light source, and changes the illuminance under voltage control by the illumination controller 12. In Fig. 4, only one halogen lamp 13 is shown. However, a plurality of halogen lamps 13 may be included, and the illumination controller 12 may adjust the lighting illuminance by controlling the number of lamps to be lighted of the halogen lamp 13. Further, the type of the halogen lamp 13 may be changed according to an installation location of the face authentication device 1a. For example, if the installation location of the face authentication device 1a is inside the building, a low-output halogen lamp can be used, and if the installation location is outside the building, a high-output halogen lamp can be used.

Variation of selection of the light source is explained below in more detail. The direct light outside the building on a fine day has an illuminance of about 100000 lux. To negate or alleviate the shadow formed on the face by such strong light to obtain a face image suitable for face authentication, irradiation light of about 10000 lux needs to be emitted. As a light source that emits the irradiation light of about 10000 lux, for example, a halogen lamp or a flash can be used.

On the other hand, the influence of the ambient light is small inside the building or in the nighttime. Therefore, the illuminance of a light source used outdoors on a fine day is not necessary. Therefore, for example, an incandescent lamp, a krypton lamp, or an electrodeless discharge lamp can be used inside the building or in the nighttime.

As a combination of light sources for outdoors and indoors, for example, the flash for the light source for outdoors and the LED for the light source for indoors, or a high-output halogen lamp for the light source for outdoors and a low-output halogen lamp for the light source for indoors can be used, respectively. Particularly, for a light source having a small amount of light such as the LED, the number of LEDS to be installed or the number of LEDS to be lighted can be changed indoors and outdoors.

The illuminance sensor 14 is fitted with its face downward below the illumination unit 10 (see Fig. 3), to measure the ambient light illuminance in a place where the face authentication device 1a is installed. The ambient light illuminance measured by the illuminance sensor 14 is transmitted to the illumination controller 12.

The face authentication terminal 20 performs authentication of the person to be authenticated by collating an input image, which is a face image of the person to be authenticated captured by the camera 22 with the registered image, which is a pre-registered face image, according to the face authentication algorithm 21. The face authentication terminal 21 also informs the illumination unit 10 that the human detection sensor 23 has detected the person to be authenticated.

The face authentication algorithm 21 compares characteristic points of the input image and the registered image with each other, and when a degree of coincidence is equal to or less than a predetermined value, it is determined that collation is successful, and when the degree of coincidence is less than the predetermined value, it is determined that collation is unsuccessful.

The camera 22 includes, for example, a charge coupled device (CCD). In the case that the illumination unit 10 emits strong irradiation light to cause overexposure in the face image, an aperture of the camera or the like is automatically adjusted to an appropriate exposure state, to take a picture of the face image.

The human detection sensor 23 detects that the person to be authenticated approaches a predetermined area in front of the face authentication device 1a, and an output of the human detection sensor 23 is transmitted to the illumination unit 10 via the face authentication terminal 20 and used as a lighting trigger of the light source.

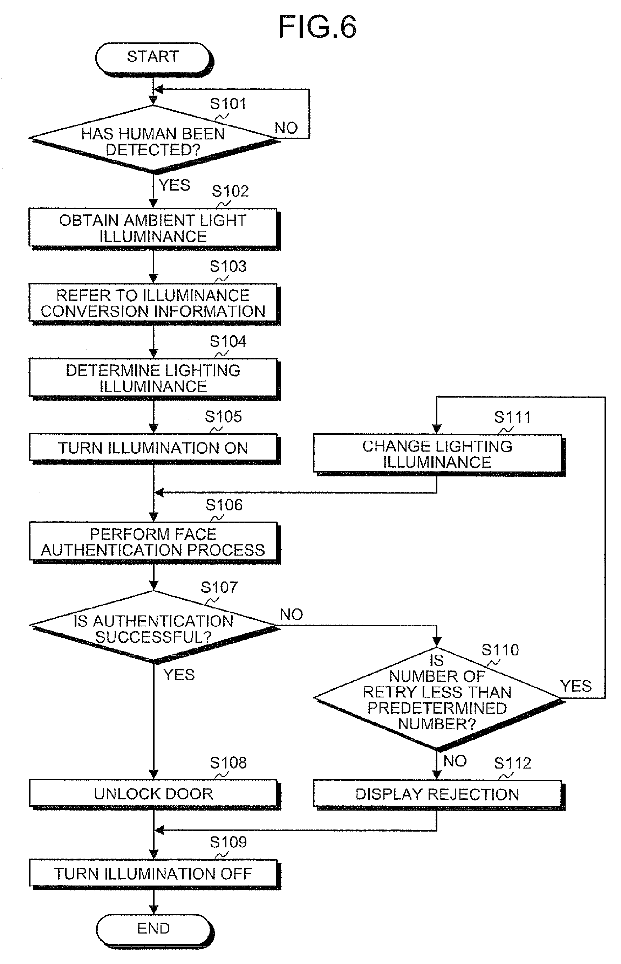

A process procedure performed by the face authentication device 1a according to the first embodiment is explained with reference to Fig. 6. Fig. 6 is a flowchart indicating the process procedure performed by the face authentication device 1a according to the first embodiment. In Fig. 6, the process procedure performed by the face authentication device 1a cooperated with a door locking function is shown.

The illumination controller 12 in the illumination unit 10 is informed from the face authentication terminal 20 that the human detection sensor 23 has detected a person to be authenticated (Step S101, Yes), and obtains the ambient light illuminance from the illuminance sensor 14 (Step S102). When the human detection sensor 23 does not detect the person to be authenticated (Step S101, No), the determination process at Step S101 is repeated.

The illumination controller 12 in the illumination unit 10 refers to the illuminance conversion information 11 (Step S103), to determine the lighting illuminance corresponding to the ambient light illuminance measured by the illuminance sensor 14 (Step S104). The illumination controller 12 adjusts the voltage to be applied to the halogen lamp 13, to thereby light the halogen lamp 13 (turn the illumination ON) with a predetermined illuminance (Step S105).

The face authentication terminal 20 then collates the input image taken by the camera 22 with the pre-registered image by using the face authentication algorithm 21, to execute a face authentication process (Step S106). When the authentication is successful (Step S107, Yes), the face authentication terminal 20 unlocks the door (Step S108) and turns off the illumination (turns the illumination OFF) (Step S109), to finish the process.

On the other hand, at Step S107, when the authentication is unsuccessful (Step S107, No), the face authentication terminal 20 determines whether the number of retry is less than a predetermined number (N) (Step S110) . When the number of retry is less than N (Step S110, Yes), the face authentication terminal 20 changes the lighting illuminance (Step S111), to repeat the process at and after Step S106.

The change of the lighting illuminance at Step S111 is performed by increasing the lighting illuminance by a predetermined value (for example, increased by 500 lux). Fig. 6 depicts a case that the lighting illuminance is changed when the number of retry is less than N. However, the process at and after Step S106 can be repeated without changing the lighting illuminance.

On the other hand, when the number of retry is equal to or larger than N at Step S110 (Step S110, No), the face authentication terminal 20 displays that authentication is rejected on a display (not shown) (Step S112), and turns off the illumination (turns the illumination OFF) (Step S109), to finish the process. Alternatively, the process at Step S109 (turns the illumination OFF) can be performed after taking the face image at Step S106.

In the first embodiment, when the human detection sensor detects the person to be authenticated, the illumination unit obtains the ambient light illuminance measured by the illuminance sensor. The lighting illuminance is then determined by using the illuminance conversion information, which indicates the lighting illuminance corresponding to the ambient light illuminance, so that when the ambient light illuminance is low, the lighting illuminance becomes low, and when the ambient light illuminance is high, the lighting illuminance becomes high. The illuminance of the light source is controlled so that the intensity of illumination becomes the determined illuminance. The face authentication terminal then authenticates the person to be authenticated under illumination by the illumination unit. Therefore, by controlling the intensity of illumination required for obtaining a favorable face image under various ambient light conditions, face authentication can be performed without dazzling the person to be authenticated.

While a case of measuring the ambient light illuminance by the illuminance sensor has been explained in the first embodiment, the ambient light illuminance can be also measured based on the luminance of the face image taken by the camera. In this case, for example, feedback control can be performed easily such that the lighting illuminance is gradually changed to negate or alleviate the shadow formed on the obtained face image.

In the first embodiment, further, a case that a single type of light source is used is explained. However, different types of light sources having different illumination performance can be used. In a second embodiment, therefore, a face authentication device 1b in which different types of light sources are used for the illumination unit 10 is explained. In the second embodiment, a different point from the first embodiment is mainly explained, and explanation of the common part is omitted or simplified.

### Second embodiment

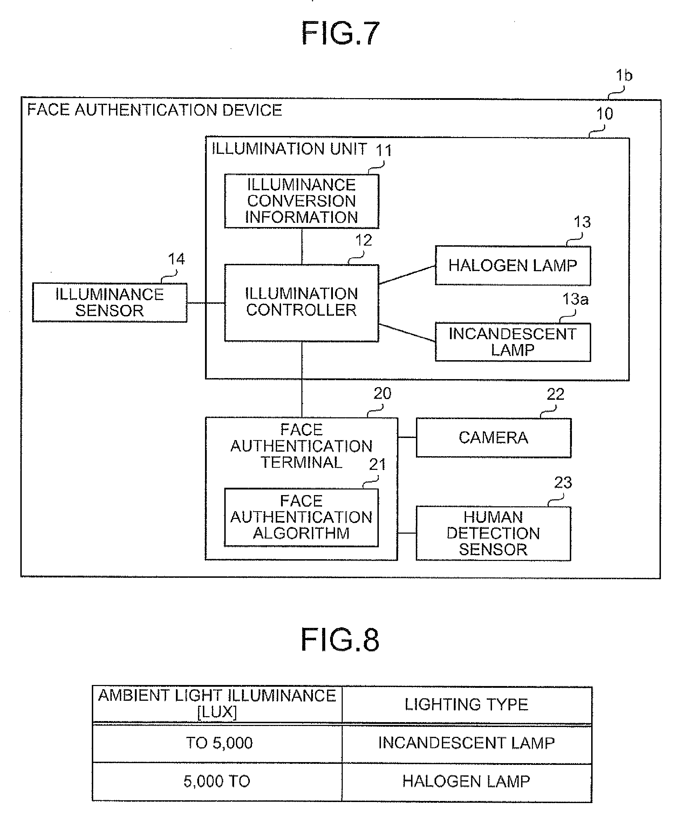

Fig. 7 is a block diagram of the configuration of the face authentication device 1b according to the second embodiment. As shown in Fig. 7, the face authentication device 1b is different from the face authentication device 1a in the first embodiment (see Fig. 4) in that two kinds of light sources, that is, the halogen lamp 13 and an incandescent lamp 13a are connected to the illumination controller 12. Further, information stored as the illuminance conversion information 11 is also different from that of the first embodiment. An example of the illuminance conversion information 11 according to the second embodiment is explained with reference to Fig. 8.

Fig. 8 is one example of the illuminance conversion information according to the second embodiment. As shown in Fig. 8, the illuminance conversion information 11 includes information indicating that if the ambient light illuminance is less than 5000, the incandescent lamp 13a is lighted, and if the ambient light illuminance is equal to or higher than 5000, the halogen lamp 13 is lighted.

By combining control of the light source by the voltage change or the current change shown in the first embodiment, further fine illuminance control of the illumination may be performed. That is, in addition to changeover to a light source having low illuminance such as the incandescent lamp 13a if the surrounding area is dark, or to a light source having high illuminance such as the halogen lamp 13 if the surrounding area is bright, illuminance control combining voltage control or current control may be performed further to obtain medium illuminance.

According to the second embodiment, because the intensity of the irradiation light is controlled by changing over the different types of light sources, the lighting illuminance corresponding to the ambient light illuminance can be easily obtained. Further, by combining with the illuminance control such as the voltage control and the current control, fine illuminance control can be performed.

In the respective embodiments described above, the illumination method at the time of authenticating the person to be authenticated is mainly explained. However, this illumination method can be also used at the time of capturing the registered image of the person to be authenticated. For example, capturing of the registered image is performed after changeover from a normal mode (authentication mode) to a registration mode by an operating unit (not shown).

By using such an illumination method also in the registration mode, conditions for the ambient light at the time of registration of the face, which have many restrictions conventionally, can be alleviated considerably. That is, even if the face authentication device is installed in any place, registration and authentication under various environments become possible by obtaining the registered image, which is obtained by controlling the illumination unit according to such an illumination method to illuminate the face with appropriate illuminance.

The type of the light source to be used at the time of registration and authentication is not particularly limited, so long as the necessary illuminance can be ensured. However, to perform highly accurate authentication, it is desired to use a light source of the same color temperature. For example, by using the krypton lamp (color temperature is 3000 K) for registration inside the building, and using the halogen lamp (color temperature is 3000 K) for authentication outside the building, the color temperature of the light sources at the time of registration and authentication can be made the same.

In the respective embodiments described above, the face authentication device that realizes the present invention is explained from a functional aspect. However, the functions of the face authentication device can be also realized by causing a computer such as a personal computer and a workstation to execute a program.

That is, various process procedures described above can be realized by executing the program prepared beforehand on the computer. These programs can be distributed via a network such as the Internet. Further, these programs can be recorded on a computer readable recording medium such as a hard disk, flexible disk (FD), CD-ROM, MO, or DVD, and read from the recording medium by the computer and executed.

### INDUSTRIAL APPLICABILITY

As described above, the face authentication device, the face authentication method, and the face authentication program according to the present invention are useful when face authentication is to be performed under various ambient light conditions, and particularly, when it is desired to perform face authentication without giving the sense of discomfort to the person to be authenticated.

## Claims

1. A face authentication device that performs authentication by capturing a face image of a person to be authenticated as an input image and collating the input image with a registered image, the face authentication device comprising:
an ambient-light illuminance detector that detects an illuminance of ambient light;
an illumination unit that irradiates with light the face of the person to be authenticated; and
an illumination controller that controls irradiation light by the illumination unit so that when the illuminance of the ambient light detected by the ambient-light illuminance detector is low, the irradiation light becomes weak, and when the illuminance of the ambient light is high, the irradiation light becomes strong.

2. The face authentication device according to claim 1, wherein the illumination controller controls the irradiation light by the illumination unit so that the irradiation light is changed at least in a range of from 1000 lux to 10000 lux.

3. The face authentication device according to claim 1 or 2, wherein the illumination controller controls the irradiation light by the illumination unit so that the irradiation light is changed stepwise or continuously at least in a range of from 2000 lux to 20000 lux of the illuminance of the ambient light detected by the ambient-light illuminance detector.

4. The face authentication device according to claim 1, 2, or 3, wherein the ambient-light illuminance detector detects the illuminance of the ambient light, when a human detection sensor detects the person to be authenticated.

5. The face authentication device according to any one of claims 1 to 4, wherein the illumination unit comprises a single type of light source that changes intensity of the irradiation light according to a voltage change or current change.

6. The face authentication device according to any one of claims 1 to 5, wherein the illumination unit comprises different types of light sources having different intensity of the irradiation light, and
the illumination controller controls the intensity of the irradiation light by changing over the light sources.

7. The face authentication device according to any one of claims 1 to 6, wherein the illumination controller controls the intensity of the irradiation light by changing the voltage or current applied to the light source.

8. The face authentication device according to any one of claims 1 to 7, wherein the illumination unit is fitted to a position where the face of the person to be authenticated is irradiated from above.

9. The face authentication device according to claim 8, wherein the ambient-light illuminance detector is an illuminance sensor and provided with its face downward below the illumination unit.

10. The face authentication device according to any one of claims 1 to 9, wherein the ambient-light illuminance detector detects the illuminance of the ambient light based on a luminance of the input image.

11. The face authentication device according to any one of claims 1 to 10, further comprising a registration unit that captures the face image of the person to be authenticated irradiated by the illumination unit and registers the captured image as the registered image.

12. A face authentication method for performing authentication by capturing a face image of a person to be authenticated as an input image and collating the input image with a registered image, the face authentication method comprising:
an ambient-light illuminance detecting step of detecting an illuminance of ambient light; and
an illumination control step of controlling irradiation light by an illumination unit that irradiates with light the face of the person to be authenticated so that when the illuminance of the ambient light detected at the ambient-light illuminance detecting step is low, the irradiation light becomes weak, and when the illuminance of the ambient light is high, the irradiation light becomes strong.

13. A face authentication program for performing authentication by capturing a face image of a person to be authenticated as an input image and collating the input image with a registered image, wherein the program causes a computer to execute:
an ambient-light illuminance detecting step of detecting an illuminance of ambient light; and
an illumination control step of controlling irradiation light by an illumination unit that irradiates with light the face of the person to be authenticated so that when the illuminance of the ambient light detected at the ambient-light illuminance detecting step is low, the irradiation light becomes weak, and when the illuminance of the ambient light is high, the irradiation light becomes strong.
